# FASCICULE DE BREVET EUROPEEN

(11) **EP 1 580 525 B1**
(45) Date de publication et mention de la délivrance du brevet: **17.12.2008**
(21) Numéro de dépôt: 04101172.7
(22) Date de dépôt: 22.03.2004
(51) Int. Cl.: G01C 5/06, G01C 13/00, G04G 1/00, G04B 47/06, B63C 11/02

(54) **Procédé de détection du début d'une plongée pour ordinateur de plongée**
Verfahren zur Detektion des Beginns eines Tauchgangs für Tauchcomputer
Method of detection of the beginning of a dive for a dive computer

(43) Date de publication de la demande: 28.09.2005
(73) Titulaire: ETA SA Manufacture Horlogère Suisse, 2540 Grenchen (CH)
(72) Inventeur: Claude, Stéphane, 2540, Grenchen/Granges (CH); Christe, Laurent, 2504, Biel/Bienne (CH)
(74) Mandataire: Ravenel, Thierry Gérard Louis

(56) Documents cités:
- EP-A- 0 682 301
- EP-A- 0 689 109

## Description

### DOMAINE TECHNIQUE

La présente invention concerne un procédé de détection du début d'une plongée destiné à être mis en oeuvre dans un dispositif électronique portable du type ordinateur de plongée. Plus précisément, le procédé est destiné à être mis en oeuvre dans un tel dispositif présentant au moins un premier mode de fonctionnement et un second mode de fonctionnement, dit mode plongée. Ce dispositif comporte notamment un capteur de pression pour mesurer la valeur de la pression environnante ainsi que des circuits électroniques de traitement des résultats des mesures de pression comprenant une base de temps et au moins une zone mémoire.

Le procédé de détection selon la présente invention est notamment basé sur l'étude des variations de la pression environnante en fonction du temps pour détecter le début d'une plongée entraînant une augmentation notable de la valeur de la pression environnante.

La présente invention concerne également un dispositif électronique portable spécialement adapté pour la mise en oeuvre du procédé mentionné ci-dessus.

### ARRIÈRE-PLAN TECHNOLOGIQUE

On connaît des ordinateurs de plongée équipés d'un capteur de pression, agencé pour mesurer la valeur de la pression environnante, et dans lesquels l'utilisateur doit indiquer le moment du début de la plongée en actionnant une commande manuelle. Lorsque l'utilisateur actionne la commande manuelle, le dispositif commute en mode plongée et mémorise la valeur de la pression ambiante comme pression de référence correspondant à la pression régnant à la surface de l'eau. Un inconvénient de tels dispositifs et que l'utilisateur peut oublier d'actionner la commande ou alors actionner la commande lorsqu'il est déjà à une certaine profondeur sous l'eau.

Le document de brevet EP 0 682 301 au nom de SEIKO EPSON CORPORATION propose de remédier à cet inconvénient, en prévoyant de vérifier que la valeur de la mesure initiale de la pression ambiante est bien comprise dans un intervalle délimité par deux valeurs de comparaison prédéfinies. Les deux valeurs de comparaison sont par exemple fixées à 550 hPa. et à 1200 hPa. Ces valeurs correspondent respectivement à une altitude de 4800 mètres au dessus de la mer et à une profondeur de 2 mètres au dessous de la mer. Si la valeur initiale de la pression ambiante est inférieure à 550hPa., la pression de référence est fixée à 550hPa. et si la valeur initiale de la pression ambiante est supérieure à 1200 hPa. la valeur de la pression de référence est fixée à 1013 hPa. Cette solution permet de limiter une éventuelle erreur concernant la pression de référence dans une marge acceptable.

Des procédés automatiques pour détecter le début d'une plongée en utilisant divers principes physiques sont également connus de l'art antérieur.

Le brevet EP 0 689 109, délivré au nom de CITIZEN WATCH CO. LTD. le 16 décembre 1998, décrit un tel type de procédé ainsi qu'un dispositif électronique portable pour sa mise en oeuvre. En particulier, ce dispositif est muni de moyens spécifiques agencés pour détecter une entrée en contact du dispositif avec de l'eau, ainsi que d'un capteur de pression, agencé pour mesurer la valeur de la pression environnante. Ce brevet prévoit que le capteur de pression est alimenté, dans un premier mode de fonctionnement, de manière à effectuer une mesure de la pression atmosphérique environ une fois par heure pour mémoriser la valeur ainsi obtenue en tant que valeur de la pression de référence. En outre, les moyens spécifiques de détection de l'eau, qui peuvent par exemple se présenter sous la forme de contacts ohmiques disposés sur la boîte du dispositif, sont alimentés en permanence ou de façon périodique.

Les contacts ohmiques remplissent ainsi une fonction d'interrupteur principal pour les circuits dédiés au mode de fonctionnement relatif à la pratique de la plongée, notamment pour le capteur de pression. En effet, lorsque la présence d'eau est détectée au niveau des contacts ohmiques, la fréquence d'alimentation du capteur de pression est modifiée de sorte que des mesures de la pression environnante sont effectuées avec une période de l'ordre de la seconde, dans le cadre d'un mode de fonctionnement appelé mode de préparation. Ces mesures permettent de calculer la valeur de la variation de pression entre la dernière valeur mesurée et la dernière valeur de la pression de référence mémorisée, la valeur de la variation étant ensuite comparée à une valeur prédéfinie constituant un seuil de déclenchement du mode plongée. Lorsque la variation de la pression franchit le seuil de déclenchement, le mode plongée est activé. Dans le cas contraire, le capteur est encore alimenté pendant quelques minutes pour surveiller l'évolution de la pression environnante. Une fois ce délai écoulé, le mode de préparation est désactivé et le capteur de pression est à nouveau alimenté avec une période de l'ordre de l'heure.

Un tel procédé de détection permet par exemple de faire une distinction entre une situation suivant laquelle le porteur du dispositif mouille celui-ci en se lavant les mains et une situation correspondant effectivement au début d'une plongée. Dans ce dernier cas, en effet, les mesures de pression effectuées par le capteur de pression permettent de valider le début d'une plongée suite à l'activation du mode de préparation, dans la mesure où le dispositif subit dans un premier temps un contact avec l'eau avant de voir sa pression environnante croître.

Toutefois, ce type de dispositif présente un inconvénient important du point de vue de sa construction résidant dans la nécessité de prévoir des moyens spécifiques de détection de la présence d'eau au niveau de sa boîte. Dans le cas précité de l'utilisation de contacts ohmiques, il est en effet impératif de prévoir des moyens spécifiques permettant de garantir l'étanchéité de la boîte du dispositif dans la région de ces contacts, ce qui peut impliquer des conséquences importantes en ce qui concerne le coût de fabrication du dispositif. De ce fait, le procédé décrit ci-dessus présente un inconvénient similaire du fait qu'il est basé sur la mise en oeuvre de moyens spécifiques de détection de la présence d'eau.

D'autres procédés et dispositifs sont connus de l'art antérieur qui ne mettent pas en oeuvre de tels moyens spécifiques de détection de la présence d'eau et qui exploitent des mesures de la pression environnante pour détecter le début d'une plongée.

En particulier, on connaît de tels dispositifs dans lesquels un capteur de pression est périodiquement alimenté pour mesurer la valeur de la pression environnante, les résultats de ces mesures étant mémorisés. Ces dispositifs sont agencés pour qu'à chaque nouvelle mesure de la pression environnante, la valeur de la variation entre cette dernière mesure et la précédente est calculée et comparée à une valeur définissant un seuil de déclenchement. Une fois le seuil de déclenchement franchi, le mode plongée est activé, l'avant dernière valeur de la pression mesurée étant typiquement mémorisée en tant que pression de référence, c'est-à-dire qu'elle est censée correspondre à la pression de surface du plan d'eau dans lequel la plongée est effectuée.

Ce type de dispositifs présente toutefois un inconvénient du fait que l'exactitude de la détection du début d'une plongée est entièrement basée sur la valeur retenue pour le seuil de déclenchement.

Ainsi, si la valeur retenue pour ce seuil est trop faible, le dispositif est exposé à un risque de déclenchements intempestifs du mode plongée. A titre d'exemple, si le porteur d'un tel dispositif descend une route de montagne à un rythme soutenu, le dispositif est susceptible d'assimiler l'augmentation de pression correspondante à une entrée dans l'eau. D'un autre côté, si la valeur retenue pour le seuil est trop grande, la précision sur le déclenchement risque de ne pas être bonne si le porteur reste dans l'eau à proximité de la surface pendant un certain temps avant le début d'une plongée. Dans un pareil cas, il se peut en outre que la valeur de la pression de référence mémorisée ne soit pas correcte car mesurée dans l'eau, à une profondeur inférieure à celle correspondant au seuil de déclenchement. Une telle erreur peut, suivant son amplitude, présenter des conséquences dangereuses pour la santé du porteur du dispositif, notamment du point de vue des données relatives à un éventuel palier de décompression sur lesquelles l'erreur serait reportée.

### RÉSUMÉ DE L'INVENTION

Un premier but de la présente invention est de pallier les inconvénients susmentionnés de l'art antérieur en proposant un procédé de détection du début d'une plongée avec une précision accrue, la détection étant effectuée sur la base de valeurs mesurées de la pression ambiante, ainsi qu'un dispositif électronique portable adapté à la mise en oeuvre d'un tel procédé.

Dans ce but, l'invention prévoit notamment un procédé du type indiqué plus haut, comprenant les étapes consistant à:
a) mesurer une valeur de la pression environnante et la mémoriser en tant que pression de référence,
b) mesurer périodiquement la valeur de la pression environnante à une première fréquence,
c) calculer périodiquement la valeur de la variation de pression entre la pression environnante mesurée et la pression de référence à la première fréquence et, comparer la valeur de variation de la pression à une valeur prédéfinie, appelée seuil de déclenchement stockée dans la zone mémoire,
d) activer le mode plongée si la valeur de variation de pression est supérieure au seuil de déclenchement ou, dans le cas contraire, continuer à l'étape e),
e) comparer, à une seconde fréquence, la valeur de variation de la pression à une grandeur prédéfinie, stockée dans la zone mémoire, ou déterminée sur la base de valeurs de pression mesurées, cette grandeur étant inférieure au seuil de déclenchement, la seconde fréquence étant inférieure ou égale à la première fréquence,
f) effectuer une correction de la valeur de la pression de référence si la valeur de variation de la pression est supérieure à la grandeur ou, dans le cas contraire, mémoriser la dernière valeur de pression mesurée en tant que nouvelle valeur de la pression de référence, puis
g) reprendre à l'étape b).

Il est prévu, de manière alternative dans l'étape e), de comparer la valeur absolue de la variation de la pression calculée à une grandeur prédéfinie, stockée dans ladite zone mémoire, ou déterminée sur la base de valeurs de pression mesurées.

Ainsi, selon ce procédé de détection, la mise à jour de la valeur de la pression de référence ne se fait pas de manière systématique à une fréquence donnée. Il est en effet tenu compte de la variation de la pression calculée pour éventuellement corriger une valeur mesurée de la pression ambiante avant de la mémoriser en tant que pression de référence. De ce fait, on obtient une précision accrue, par rapport aux dispositifs de l'art antérieur précédemment cités, pour la détection du début d'une plongée.

De manière préférée, il est en outre prévu que le procédé selon la présente invention comprend en outre, après l'étape d) et avant de continuer à l'étape e) les étapes consistant à :
d') déterminer périodiquement, à une troisième fréquence, le signe de la variation de la pression, la troisième fréquence étant comprise entre les première et seconde fréquences,
d") mémoriser la valeur de la dernière pression mesurée en tant que valeur de la pression de référence puis reprendre à l'étape b) si ladite variation de pression est négative ou, dans le cas contraire, continuer à l'étape e).

Ces étapes supplémentaires permettent encore d'augmenter la précision sur la valeur de la pression de référence mémorisée en multipliant les possibilités de la mettre à jour par rapport au procédé de base.

Selon une première variante de réalisation de la présente invention, lorsque la grandeur est prédéfinie, celle-ci étant appelée premier facteur de correction, la correction de l'étape f) consiste à additionner le premier facteur de correction à la valeur de la pression de référence mémorisée, le résultat de l'addition étant mémorisée en tant que nouvelle valeur de la pression de référence.

Selon une seconde variante de réalisation de la présente invention, lorsque la grandeur est déterminée sur la base de valeurs de pression mesurées, l'étape e) comprend en outre une action de mise en mémoire de la valeur de la variation de pression à la seconde fréquence, au moins les trois dernières valeurs de la variation de pression mémorisées étant mises à profit pour calculer la grandeur. Cette dernière correspond, selon une variante préférée, au résultat du calcul de la moyenne de la variation de pression sur les trois dernières valeurs, la correction de l'étape f) consistant à additionner la grandeur à la valeur de la pression de référence mémorisée, le résultat de l'addition étant mémorisé en tant que nouvelle valeur de la pression de référence.

### BRÈVE DESCRIPTION DES DESSINS

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1 est un diagramme schématique général du circuit électronique d'un exemple de dispositif électronique portable pour la mise en oeuvre du procédé selon la présente invention,
- la figure 2 est un diagramme exposant de manière schématique les étapes du procédé de détection du début d'une plongée selon un premier mode de réalisation de la présente invention,
- la figure 3 est un diagramme exposant de manière schématique les étapes du procédé de détection du début d'une plongée selon un second mode de réalisation de la présente invention, et
- la figure 4 est un diagramme exposant de manière schématique les étapes du procédé de détection du début d'une plongée selon un troisième mode de réalisation de la présente invention.

### DESCRIPTION DÉTAILLÉE

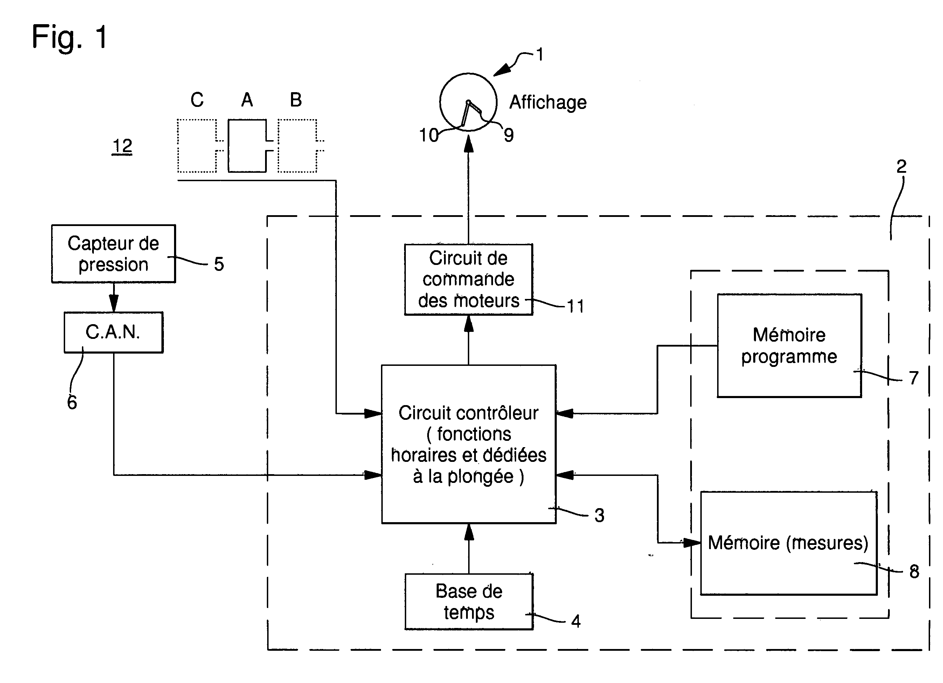

La figure 1 représente de manière schématique un diagramme général du circuit électronique d'un exemple de dispositif électronique portable pour la mise en oeuvre du procédé selon la présente invention. Dans l'exemple retenu ici, le dispositif électronique portable se présente sous la forme particulière d'une montre 1 électronique de plongée à affichage analogique comportant au moins deux modes de fonctionnement, un premier mode horaire et un second mode plongée.

Bien entendu, le procédé selon la présente invention n'est pas limité à sa mise en oeuvre sur une montre mais peut également être mis en oeuvre sur tout type d'ordinateur de plongée portable conventionnel sans sortir du cadre de la présente invention.

De manière générale, le circuit électronique de la montre 1 comprend notamment un circuit intégré 2 comportant un circuit contrôleur 3 susceptible de gérer les fonctions horaires conventionnelles de la montre 1 comprenant, dans ce but, un circuit de division du temps et étant relié notamment à un résonateur 4 fournissant une base de temps. A partir de cette base de temps, des informations temporelles sont produites par le circuit contrôleur 3, notamment pour assurer les fonctions du mode horaire et les fonctionnalités relatives au mode plongée.

En outre, le circuit contrôleur 3 reçoit en entrée des signaux générés par un capteur de pression 5 générant des signaux électriques analogiques représentatifs de la pression environnante. Ces signaux transitent par un convertisseur analogique-numérique 6 avant d'être fournis en entrée du circuit contrôleur 3, sous la forme d'un signal digital.

Le capteur de pression 5 est de type conventionnel et l'homme du métier ne rencontrera pas de difficulté particulière pour en choisir un qui soit adapté à la mise en oeuvre de la présente invention.

Le circuit intégré 2 comporte également des zones de mémoire, notamment une première zone de mémoire 7, préférablement de type non volatile, contenant un programme permettant au circuit contrôleur 3 d'effectuer les calculs relatifs au mode plongée, sur la base d'un algorithme de décompression, par exemple. Le choix d'une mémoire non volatile reprogrammable (Flash ou EPROM, par exemple) permet éventuellement de modifier ultérieurement le programme de calcul en fonction de l'algorithme de décompression retenu. Le circuit intégré 2 comporte de manière préférée au moins une seconde zone de mémoire 8, également de type non volatile, dans laquelle des mesures ainsi que des résultats de calculs effectués par le circuit contrôleur 3 sont stockés. Cette seconde zone de mémoire 8 est notamment prévue pour stocker les mesures de profondeur et les mesures temporelles correspondantes relatives à la ou aux dernières plongées, à titre illustratif.

A partir de ces signaux d'entrée respectifs, le circuit contrôleur 3 détermine la situation et l'état du plongeur à chaque instant, du point de vue de la pratique de la plongée. Dans ce but, on peut notamment prévoir qu'en mode horaire, une mesure de pression est effectuée toutes les cinq minutes et qu'en mode plongée, une mesure de pression est effectuée toutes les deux secondes, par exemple. A partir de toutes ces mesures périodiques et sur la base du programme stocké dans la première zone de mémoire 7, le circuit contrôleur 3 détermine un certain nombre de paramètres pertinents pour la santé du plongeur, c'est-à-dire en particulier, le taux résiduel d'azote dissout dans son organisme et la quantité de micro-bulles formées, par exemple.

Par ailleurs, dans l'exemple de réalisation décrit, la montre 1 présente un affichage de type analogique, comprenant notamment des aiguilles des heures 9 et des minutes 10, commandées par des moteurs bidirectionnels (non représentés). Ainsi, le circuit contrôleur 3 est programmé pour produire des signaux adaptés à destination d'un circuit de commande 11 des moteurs bi-directionnels, de telle manière que les aiguilles des heures 9 et des minutes 10 affichent des informations relatives à l'heure courante, dans un premier mode horaire, et des informations relatives à la pratique de la plongée dans un second mode de plongée. La montre comporte en outre un organe de commande 12, tel qu'une tige-couronne, prévu notamment pour ajuster l'heure courante ou encore pour activer des fonctions particulières. A titre d'exemple non limitatif, on a représenté sur la figure 1 trois positions notées A, B et C pour l'organe de commande 12, la position A étant une position de repos, la position B une position poussée instable et, la position C une position tirée stable.

Le lecteur intéressé par le fonctionnement d'un dispositif électronique portable de ce type pourra consulter, par exemple, les demandes de brevets EP 1 396 766 A1 et EP 1 396 767 A1, toutes deux déposées au nom d'Asulab S.A. le 4 septembre 2002 et intitulées "Montre électronique de plongée à affichage analogique", pour obtenir plus de détails. En effet, le procédé selon la présente invention concernant le passage d'un premier mode de fonctionnement vers le mode plongée, le fonctionnement de ce dernier ne sera pas abordé en détail dans la présente demande.

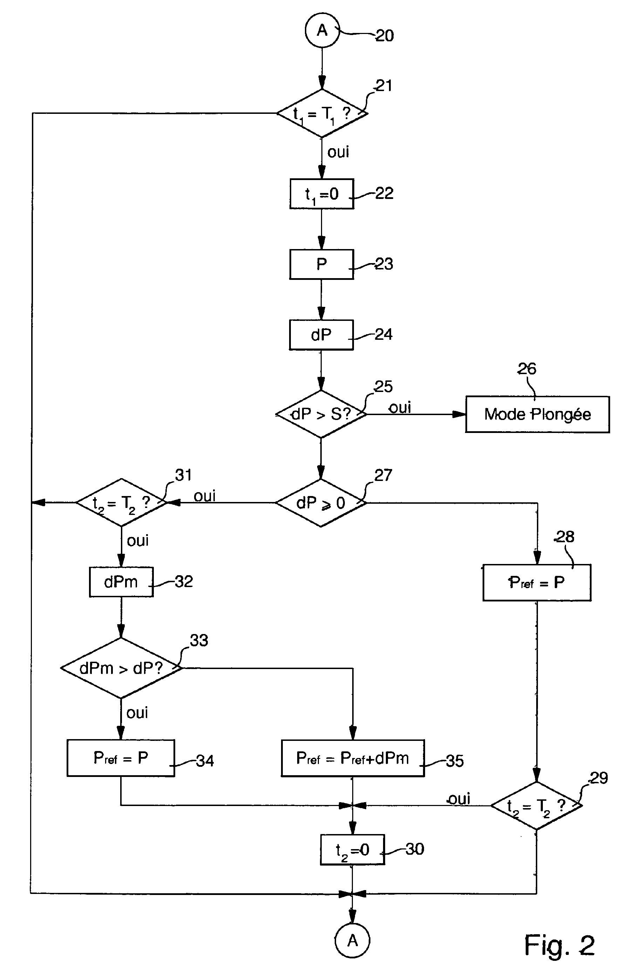

Les figures 2 à 4 présentent des diagrammes relatifs à trois modes de réalisation du procédé de détection du début de plongée selon la présente invention, la description de ces modes de réalisation étant fournie à titre non limitatif. Ces trois procédés permettent de "filtrer" les mesures de pression effectuées périodiquement par le capteur de pression 5 pour limiter les déclenchements intempestifs du mode plongée, comme cela peut arriver avec certains dispositifs de l'art antérieur, lorsque par exemple on descend rapidement d'une montagne. De même, ces procédés visent à éviter qu'un dispositif les mettant en oeuvre ne détecte pas le début d'une plongée, du fait par exemple que le porteur reste un moment dans l'eau, au niveau de la surface, avant de réellement débuter la plongée en tant que telle.

La figure 1 représente un diagramme schématique détaillant les étapes principales du procédé de détection du début de la plongée selon un premier mode de réalisation de la présente invention.

Le circuit contrôleur 3 est programmé de manière à alimenter périodiquement le capteur de pression 5 lorsque la montre est dans le mode horaire, pour effectuer des mesures de la valeur de la pression environnante.

Le procédé démarre au stade A, repéré par la référence numérique 20, du diagramme, une valeur de pression précédemment mesurée étant mémorisée en tant que pression de référence Pref. En outre, un premier compteur (non représenté) est prévu pour mesurer des premiers intervalles de temps t1, ce compteur ayant une valeur de t1 comprise entre 0 et T1 au stade A, T1 étant une valeur de période de mesures. De manière préférée, la période T1 est sensiblement comprise entre 0,1 et 10 secondes.

A l'étape 21 du diagramme, à partir du stade A, le circuit contrôleur 3 teste la valeur du premier compteur. Tant que la valeur du compteur n'est pas égale à T1, le procédé reprend à l'étape A, de préférence mais de manière non limitative une fois par seconde, la valeur du compteur étant incrémentée à chaque reprise.

Lorsque la valeur du premier compteur atteint la valeur T1, celle-ci est remise à zéro, en 22 sur la figure 2.

Le capteur de pression 5 est alors alimenté pour effectuer une mesure de la pression environnante P, en 23. Sur la base de la mesure effectuée, le circuit contrôleur 3 calcule une variation de pression dP, en 24, sur la base des valeurs de pression dernièrement mesurée et de pression de référence Pref précédemment mémorisée.

Le circuit contrôleur 3 compare ensuite, en 25, la valeur calculée pour la variation de la pression dP à une valeur prédéfinie S, appelée seuil de déclenchement, et qui correspond à une hauteur d'eau valant préférablement entre 0,2 et 1,5 mètres.

Lorsque la valeur de la variation de la pression dP excède le seuil de déclenchement S, le mode plongée est activé, en 26.

Dans le cas contraire, à savoir lorsque la valeur de la variation de la pression dP est inférieure à la valeur du seuil de déclenchement S, le circuit contrôleur 3 effectue un test supplémentaire sur la valeur de la variation de la pression dP, en 27. Plus précisément, le circuit contrôleur détermine le signe de dP, cette opération étant préférablement effectuée à la même fréquence que les mesures de la pression environnante, en 23. Toutefois, on peut prévoir en alternative que la fréquence du test 27 est différente de celle des mesures de la pression environnante sans sortir du cadre de la présente invention.

D'une part, lorsque le résultat du test 27 indique que la valeur de dP est négative, ce qui correspond à une diminution de la pression entre la dernière mémorisation de la valeur de la pression de référence Pref et la dernière mesure de la pression environnante P effectuée, cette dernière valeur est mémorisée en tant que nouvelle valeur de la pression de référence Pref, en 28.

On constate ensuite, en 29 sur la figure 2, que la valeur t2 d'un second compteur, dont la fonction sera exposée plus loin, est testée. Lorsque la valeur t2 est égale à une valeur T2 qui correspond à une seconde fréquence de calcul du procédé de détection selon la présente invention, elle est remise à zéro, en 30, avant de reprendre le procédé en A. Lorsque la valeur t2 du second compteur est inférieure à T2, on reprend directement le procédé en A en procédant à une incrémentation de t2.

D'autre part, lorsque le résultat du test 27 indique que la valeur de dP est positive ou nulle, ce qui correspond à une augmentation ou une stagnation de la pression entre la dernière mémorisation de la valeur de la pression de référence Pref et la dernière mesure de la pression environnante P effectuée, le circuit contrôleur passe à un test supplémentaire en 31.

Le test supplémentaire 31 consiste à vérifier si la valeur t2 du second compteur a atteint la valeur T2, correspondant à la fréquence f2 à laquelle la valeur de la pression de référence mémorisée est susceptible d'être corrigée, cette seconde fréquence f2 étant plus faible que la fréquence f1 à laquelle les mesures de la valeur de la pression environnante P sont effectuées.

La fréquence f2 doit être suffisamment faible, autrement dit la période T2 correspondante doit être suffisamment longue, pour que la variation de pression ait une valeur significative du point de vue de la correction de la valeur de la pression de référence Pref. Préférablement, on prendra une valeur de T2 sensiblement comprise entre 30 secondes et 10 minutes, soit une fréquence f2 de l'ordre de 0,001 à 0,04 Hz.

Lorsque la valeur t2 est inférieure à T2, on reprend directement le procédé en A en procédant à une incrémentation de t2.

Lorsque la valeur de t2 est égale à T2, le circuit contrôleur 3 effectue un nouveau calcul en 32 dont le but est d'évaluer le comportement récent de la valeur de la pression environnante par rapport à son comportement moyen pris sur un intervalle de temps plus important. Dans ce but, le circuit contrôleur 3 mémorise la dernière valeur de la variation de la pression dP calculée dans la zone mémoire 8, cette dernière comportant préférablement au moins quatre emplacements à cet effet. Ainsi, la dernière valeur de la variation de la pression dP calculée est mémorisée en remplaçant la valeur de dP la plus ancienne encore en mémoire. Le circuit contrôleur calcule alors la valeur moyenne dPm de la variation de la pression sur la base des quatre dernières valeurs mises en mémoire, notées dPi-3, dPi-2, dPi-1 et dP, simplement en les additionnant et en divisant le résultat de l'addition par quatre.

A partir de la valeur dPm calculée ci-dessus, le circuit contrôleur 3 compare, en 33, cette valeur moyenne à la dernière valeur de la variation de la pression dP calculée.

Lorsque la dernière valeur de la variation de la pression dP est inférieure à dPm, la valeur de la pression de référence Pref est mise à jour avec la dernière valeur mesurée de la pression environnante P, en 34. Une fois la mise à jour effectuée, la valeur t2 du second compteur est remise à zéro en 30 et on reprend le procédé au stade A.

Lorsque la dernière valeur de la variation de la pression dP est supérieure à dPm, on procède, en 35, à une étape de correction de la valeur de la pression de référence Pref. Dans ce cas, on considère en effet que la dernière variation de la pression calculée est trop importante par rapport à cette variation prise en compte sur une durée plus longue, c'est pourquoi cette variation n'est pas intégralement répercutée sur la valeur de la pression de référence Pref mémorisée. Par conséquent, on ajoute la valeur moyenne dPm calculée en 32 à la dernière valeur de la pression de référence mémorisée, le résultat de cette addition étant mémorisée en tant que nouvelle valeur de la pression de référence Pref, pour tenir compte de la tendance récente en terme de variation de la valeur de la pression environnante. L'effet de cette correction est de "lisser" les variations de la valeur de la pression de référence Pref pour filtrer les variations brutales de la pression environnante.

Une fois la correction de la valeur de la pression de référence Pref effectuée, la valeur t2 du second compteur est remise à zéro en 30 et on reprend le procédé au stade A.

L'ensemble de ces étapes est répété indéfiniment tant que la valeur de la variation de la pression dP calculée en 24 ne dépasse pas le seuil de déclenchement S dans le test effectué en 25.

Selon une variante préférée du procédé qui vient d'être décrit, on prévoit de remplacer les valeurs mémorisées de la variation de la pression dPi-3, dPi-2, dPi-1 et dP par zéro dans la zone mémoire 8 au cours de la mise en oeuvre de l'étape 28, c'est-à-dire lorsque le circuit contrôleur 3 détermine que la dernière valeur calculée de la variation de la pression est négative à l'étape 27.

Le principe général de fonctionnement du procédé selon le présent mode de réalisation est basé sur le fait que la pression environnante augmente de façon notable lors du début d'une plongée. Ainsi, lorsque la valeur de la pression varie rapidement d'une valeur suffisante pour dépasser le seuil de déclenchement, le mode plongée est activé. Dans le cas contraire, on distingue ensuite deux cas de figure, à savoir le premier cas d'une diminution de la pression environnante et le second cas d'une augmentation modérée de la pression environnante.

Dans le premier cas, on considère que le porteur ne se trouve pas dans l'eau mais qu'il est en train de prendre de l'altitude. La valeur de la pression de référence Pref mémorisée est alors mise à jour avec une fréquence relativement élevée, c'est-à-dire de l'ordre de quelques secondes, pour que la valeur mémorisée soit représentative de la valeur réelle de la pression atmosphérique avec une bonne précision. A titre d'exemple, une telle mesure se justifie pleinement lorsque le porteur d'un dispositif mettant en oeuvre le présent procédé monte en voiture jusqu'à un lac d'altitude pour y effectuer une plongée.

Dans le second cas, une augmentation modérée de la pression environnante peut être attribuée à deux causes différentes, soit une entrée dans l'eau tout en restant à une faible profondeur, soit une descente rapide en surface, comme par exemple une descente rapide de montagne en voiture ou encore lors de la pratique d'un sport aérien. Le procédé selon la présente invention permet de tenir compte de ce type d'évènements du fait que la pression de référence est mise à jour mais avec une fréquence relativement faible comparativement à la fréquence des mesures de la pression environnante. En outre, lorsque l'augmentation de la pression environnante devient plus grande, cette augmentation est répercutée sur la valeur de la pression de référence Pref mémorisée mais en étant atténuée. Ainsi, les variations de la pression environnante sont prises en compte tout en subissant une sorte de lissage lors de leur traitement par le circuit contrôleur.

Grâce à un tel procédé, la détection du début d'une plongée peut être garanti avec une bonne fiabilité, les déclenchements intempestifs du mode plongée étant en outre fortement limités.

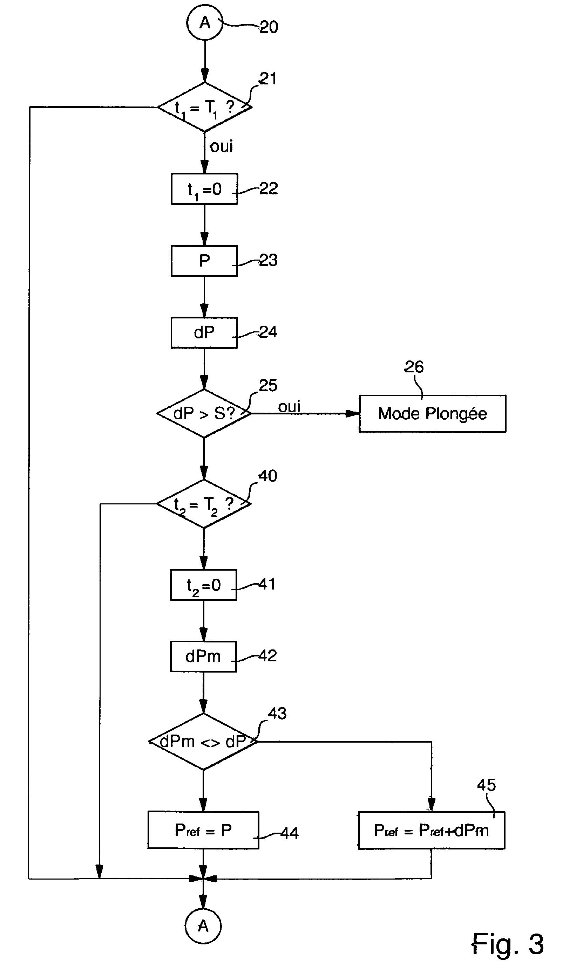

La figure 3 représente un diagramme schématique détaillant les étapes principales du procédé de détection du début de la plongée selon un second mode de réalisation de la présente invention.

Les premières étapes du procédé selon le présent mode de réalisation jusqu'à la comparaison de la valeur de la variation de la pression avec la valeur S du seuil de déclenchement, à l'étape 25, étant les mêmes que dans le premier mode de réalisation, elles ne seront plus décrites en détail. En outre, les références numériques utilisées dans le cadre du premier mode de réalisation pour ces étapes ont été reportées sur la figure 3.

Lorsque la valeur de la variation de la pression dP est inférieure au seuil de déclenchement S, ce qui correspond à une augmentation ou une stagnation de la pression entre la dernière mémorisation de la valeur de la pression de référence Pref et la dernière mesure de la pression environnante P effectuée, le circuit contrôleur passe à un test supplémentaire en 40.

Le test supplémentaire 40 consiste à vérifier si la valeur t2 d'un second compteur a atteint la valeur T2 correspondant à la fréquence f2 à laquelle la valeur de la pression de référence mémorisée est susceptible d'être corrigée. Cette seconde fréquence f2 est plus faible que la fréquence f1 à laquelle les mesures de la valeur de la pression environnante P sont effectuées.

La fréquence f2 est ici du même ordre de grandeur que dans le cadre du premier mode de réalisation. Préférablement, on prendra une valeur de T2 sensiblement comprise entre 30 secondes et 10 minutes, soit une fréquence f2 de l'ordre de 0,001 à 0,04 Hz.

Lorsque la valeur t2 est inférieure à T2, on reprend directement le procédé en A en procédant à une incrémentation de t2.

Lorsque la valeur de t2 est égale à T2, le circuit contrôleur 3 remet à zéro la valeur t2 du second compteur en 41, avant d'effectuer un nouveau calcul, en 42, dont le but est d'évaluer le comportement récent de la valeur de la pression environnante par rapport à son comportement moyen pris sur un intervalle de temps plus important. Cette étape 42 est similaire à l'étape 32 décrite en relation avec le premier mode de réalisation. Le circuit contrôleur 3 mémorise la dernière valeur de la variation de la pression dP calculée dans la zone mémoire 8, cette dernière comportant préférablement au moins quatre emplacements à cet effet. Ainsi, la dernière valeur de la variation de la pression dP calculée est mémorisée en remplaçant la valeur de dP la plus ancienne encore en mémoire. Le circuit contrôleur calcule alors la valeur moyenne dPm de la variation de la pression sur la base des quatre dernières valeurs mises en mémoire, notées dPi-3, dPi-2, dPi-1 et dP, simplement en les additionnant et en divisant le résultat de l'addition par quatre.

A partir de la valeur dPm calculée ci-dessus, le circuit contrôleur 3 compare, en 43, la valeur absolue de cette valeur moyenne à la valeur absolue de la dernière valeur de la variation de la pression dP calculée.

Lorsque la dernière valeur de la variation de la pression dP est inférieure à dPm, en valeurs absolues, la valeur de la pression de référence Pref est mise à jour avec la dernière valeur mesurée de la pression environnante P, en 44. Une fois la mise à jour effectuée, on reprend le procédé au stade A.

Lorsque la dernière valeur de la variation de la pression dP est supérieure à dPm, en valeurs absolues, on procède, en 45, à une étape de correction de la valeur de la pression de référence Pref. Dans ce cas, on considère en effet que la dernière variation de la pression calculée est trop importante par rapport à cette variation prise en compte sur une durée plus longue, c'est pourquoi cette variation n'est pas intégralement répercutée sur la valeur de la pression de référence Pref mémorisée. Par conséquent, on ajoute la valeur moyenne dPm calculée en 42 à la dernière valeur de la pression de référence mémorisée, le résultat de cette addition étant mémorisé en tant que nouvelle valeur de la pression de référence Pref, pour tenir compte de la tendance récente en terme de variation de la valeur de la pression environnante. L'effet de cette correction est de "lisser" les variations de la valeur de la pression de référence Pref pour filtrer les variations brutales de la pression environnante.

Une fois la correction de la valeur de la pression de référence Pref effectuée, on reprend le procédé au stade A.

L'ensemble de ces étapes est répété indéfiniment tant que la valeur de la variation de la pression dP calculée en 24 ne dépasse pas le seuil de déclenchement S dans le test effectué en 25.

Selon une variante préférée du procédé qui vient d'être décrit, on prévoit de remplacer les valeurs mémorisées de la variation de la pression dPi-3, dPi-2, dPi-1 et dP par zéro dans la zone mémoire 8 au cours de la mise en oeuvre de l'étape 44, c'est-à-dire lorsque le circuit contrôleur 3 détermine que la dernière valeur calculée de la variation de la pression est suffisamment faible pour remplacer la valeur de la pression de référence mémorisée par la dernière valeur mesurée de la pression environnante.

On peut noter deux variations notables de ce procédé par rapport à celui décrit en relation avec le premier mode de réalisation.

D'une part, on constate que la valeur de la pression de référence Pref est toujours mise à jour à la fréquence f2, ce qui peut entraîner une précision moindre de la valeur de la pression de référence mémorisée par rapport à la pression réelle en surface, dans certaines circonstances particulières d'utilisation.

D'autre part, on constate qu'aucune distinction n'est effectuée suivant le signe de la variation de la pression calculée comme c'est le cas à l'étape 27 du procédé selon le premier mode de réalisation. En effet, la comparaison de la dernière valeur calculée de la variation de la pression dP avec la valeur moyenne dPm se fait en valeurs absolues. Ainsi, le traitement effectué ultérieurement par le circuit contrôleur 3 est le même que dP soit positive ou négative. Par conséquent, le lissage des variations de la valeur de la pression environnante se fait dans les deux sens, autrement dit, toutes les variations de la valeur de la pression environnante sont atténuées, avant que cette dernière ne soit mémorisée en tant que pression de référence, que ces variations correspondent à des diminutions ou à des augmentations de la pression environnante.

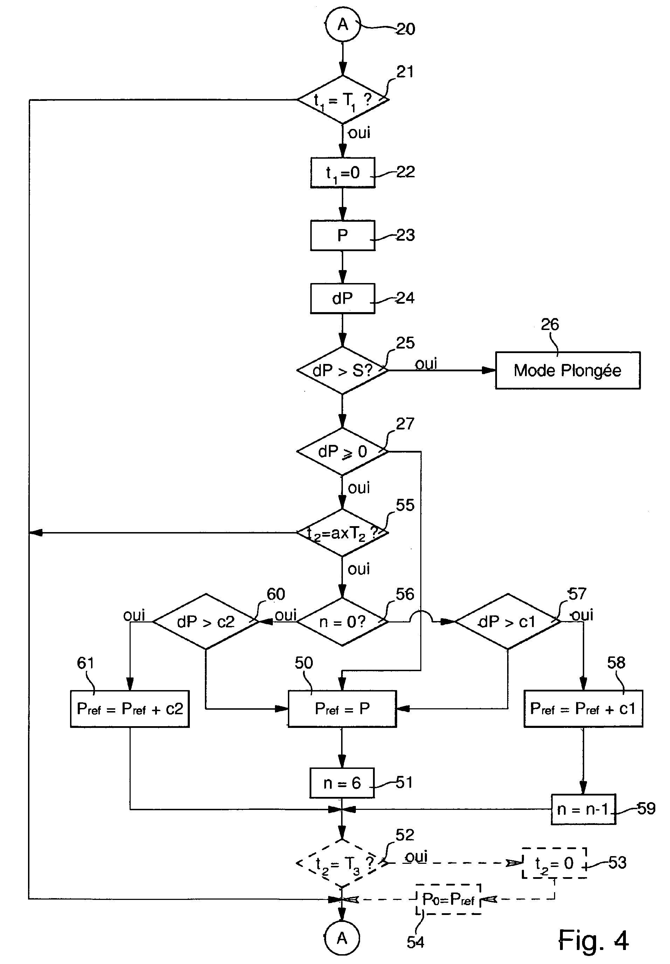

La figure 4 représente un diagramme schématique détaillant les étapes principales du procédé de détection du début de la plongée selon un troisième mode de réalisation de la présente invention.

Les premières étapes du procédé selon le présent mode de réalisation jusqu'à la détermination du signe de la variation de la pression, à l'étape 27, étant les mêmes que dans le premier mode de réalisation, elles ne seront plus décrites en détail. En outre, les références numériques utilisées dans le cadre du premier mode de réalisation pour ces étapes ont été reportées sur la figure 4.

Le procédé selon le présent mode de réalisation se distingue des deux précédents principalement par la nature de la grandeur utilisée pour corriger la valeur de la pression de référence mémorisée, qui est ici une grandeur prédéfinie et non plus une grandeur basée sur des valeurs de pression environnante mesurées.

Lorsque le résultat du test 27 indique que la valeur de dP est négative, ce qui correspond à une diminution de la pression entre la dernière valeur de la pression de référence Pref mémorisée et la dernière mesure de la pression environnante P effectuée, cette dernière valeur est mémorisée en tant que nouvelle valeur de la pression de référence Pref, en 50.

On constate ensuite, en 51 sur la figure 4, que le circuit contrôleur 3 attribue une valeur particulière, ici 6, à la valeur n d'un compteur supplémentaire, dont la fonction sera exposée plus loin.

Dans une variante préférée de mise en oeuvre, la valeur t2 d'un second compteur, similaire à celui décrit en relation avec les modes de réalisation précédents, est ensuite testée en 52. Lorsque la valeur t2 est égale à une valeur T3 qui correspond à une fréquence f3 de mise à jour, elle est remise à zéro, en 53, tandis que la dernière valeur de la pression de référence Pref mémorisée est sauvegardée en tant que pression de surface P₀, en 54, celle-ci étant utilisée comme référence dans le mode plongée. Suite à cette mise à jour, non indispensable dans la mise en oeuvre du procédé de détection selon la présente invention, on reprend le procédé en A. Lorsque la valeur t2 du second compteur est inférieure à T3, on reprend directement le procédé en A en procédant à une incrémentation de t2. De même que mentionné plus haut, on prendra préférablement une valeur de T3 comprise entre 30 secondes et 10 minutes, soit une fréquence f3 correspondante de l'ordre de 0,001 à 0,04 Hz.

D'autre part, lorsque le résultat du test 27 indique que la valeur de dP est positive ou nulle, ce qui correspond à une augmentation ou une stagnation de la pression entre la dernière mémorisation de la valeur de la pression de référence Pref et la dernière mesure de la pression environnante P effectuée, le circuit contrôleur passe à un test supplémentaire en 55.

Le test supplémentaire 55 consiste à vérifier si la valeur t2 du second compteur a atteint une valeur a*T2, a étant un nombre entier et T2 correspondant à une fréquence f2 à laquelle la valeur de la pression de référence mémorisée est susceptible d'être corrigée, cette fréquence f2 étant comprise entre les fréquences f1 et f3.

La fréquence f2 doit être suffisamment faible, autrement dit la période T2 correspondante doit être suffisamment longue, pour que la variation de pression ait une valeur significative du point de vue de la correction de la valeur de la pression de référence Pref. Préférablement, on prendra une valeur de T2 sensiblement comprise entre 30 secondes et 5 minutes, soit une fréquence f2 de l'ordre de 0,003 à 0,04 Hz.

Lorsque la valeur t2 n'est pas un multiple de T2, on reprend directement le procédé en A en procédant à une incrémentation de t2.

Lorsque la valeur t2 du second compteur est égale à a*T2, autrement dit qu'elle est un multiple de T2, on passe au test 56 de la valeur n du compteur supplémentaire.

Si la valeur n du compteur supplémentaire est différente de zéro, le circuit contrôleur effectue un autre test, en 57, sur la base de la dernière valeur calculée de la variation de la pression dP. La valeur de dP est comparée à une grandeur prédéfinie c1 dont la valeur correspond à une hauteur d'eau de l'ordre de 2 à 40 cm.

Lorsque la valeur de dP est inférieure à c1, appelée premier facteur de correction, on reprend la fin du procédé de détection, tel que décrit plus haut, à l'étape 50 où la valeur de la pression de référence Pref mémorisée est mise à jour en prenant la dernière valeur mesurée de la pression environnante P.

Lorsque la valeur de dP est supérieure à c1, le circuit contrôleur effectue une correction de la valeur de la pression de référence Pref, en 58, en mémorisant la somme de la dernière valeur de Pref mémorisée avec la valeur de c1 en tant que nouvelle valeur de la pression de référence Pref. Ensuite, la valeur n du compteur supplémentaire est décrémentée en 59 avant de poursuivre la fin du procédé en reprenant à l'étape 52 précédemment décrite.

On constate ainsi qu'en partant d'une valeur n égale à six dans le compteur supplémentaire, six passages successifs par les étapes 57 à 59 sont nécessaires pour ramener la valeur n à zéro.

A un tel stade, le résultat du test en 56 est différent de ce qui vient d'être décrit ce qui modifie les étapes qui suivent ce test.

En effet, lorsque la valeur n du compteur supplémentaire est égale à zéro en 56, le circuit contrôleur 3 effectue un test différent, en 60, sur la base de la dernière valeur calculée de la variation de la pression dP. Cette dernière est alors comparée à une seconde grandeur prédéfinie c2, appelée second facteur de correction, dont la valeur est comprise entre les valeurs respectives de c1 et de S.

Lorsque le résultat de ce test 60 conduit à la constatation que dP est inférieure à c2, le procédé reprend à l'étape 50 où la dernière valeur mesurée de la pression environnante est mémorisée en tant que nouvelle valeur de la pression de référence Pref.

Lorsque la valeur de dP est supérieure à c2, on continue à l'étape 61 qui constitue une étape supplémentaire de correction de la valeur de la pression de référence Pref. Lors de cette étape en effet, la somme de la dernière valeur mémorisée de la pression de référence avec c2 est mémorisée en tant que nouvelle valeur de la pression de référence Pref.

Le procédé se poursuit après cette étape de correction, en reprenant à l'étape 52 déjà décrite.

L'ensemble de ces étapes est répété indéfiniment tant que la valeur de la variation de la pression dP calculée en 24 ne dépasse pas le seuil de déclenchement S dans le test effectué en 25.

Ce procédé prévoit une distinction sur le signe de la dernière valeur calculée de la variation de pression dP, de même que le procédé selon le premier mode de réalisation, la pression de référence étant corrigée uniquement dans les cas où la valeur de la pression environnante ne diminue pas.

La différence essentielle distinguant le procédé selon le présent mode de réalisation des précédents réside dans le fait que la grandeur utilisée pour effectuer la correction de la valeur de la pression de référence Pref ne prend pas en compte l'évolution passée de la valeur de la pression environnante dans la mesure où elle correspond à une constante prédéfinie.

En outre, on comprend bien que les étapes liées à l'utilisation d'un compteur supplémentaire de valeur n ne sont pas indispensables à la mise en oeuvre du procédé de détection selon le présent mode de réalisation, plus particulièrement en ce qui concerne le test 60 et l'étape de correction 61.

En effet, les augmentations de la pression mesurée P sont répercutées au niveau de la valeur de la pression de référence Pref mémorisée tout en étant atténuées. En d'autres termes, l'étape de correction 58, de même que l'étape 61, plafonne, avec une valeur c1, l'augmentation de la valeur de la pression de référence à mémoriser pour lisser les augmentations de la pression environnante.

Aussi, dans le cas particulier où la pression environnante augmente de manière quasi-continue pendant plusieurs minutes, si on se contente d'effectuer la correction telle que mentionnée à l'étape 58, la valeur mémorisée de la pression de référence s'écarte de plus en plus de la valeur réelle de la pression environnante.

C'est pourquoi il est préférablement prévu de mettre en oeuvre une étape de correction 61 supplémentaire au cours de laquelle la valeur de la pression de référence à mémoriser est également plafonnée mais avec une valeur c2 supérieure à c1. Cette étape supplémentaire permet d'accroître encore plus la précision du procédé selon le troisième mode de réalisation.

L'homme du métier pourra bien entendu prévoir la mise à jour de la pression de surface P₀, telle que décrite à l'étape 54 du présent mode de réalisation, aux modes de réalisation précédents. Une telle précaution permet en effet de garantir une bonne précision à cette valeur qui est utilisée ultérieurement, dans le mode plongée, pour effectuer des calculs de profondeur et, pour déterminer éventuellement des informations relatives à la sécurité du porteur du dispositif.

La description qui précède correspond à des modes de réalisation préférés de l'invention et ne saurait en aucun cas être considérée comme limitative, en ce qui concerne plus particulièrement la structure décrite pour la montre, les fonctions décrites, la nature et le nombre des organes de commande utilisés. Comme mentionné précédemment, le procédé de détection selon la présente invention peut être mis en oeuvre dans tout dispositif électronique portable du type ordinateur de plongée, que son affichage soit analogique ou numérique. De même, l'invention n'est pas limitée aux modes de fonctionnements décrits, dans la mesure où ces paramètres sont modifiables par une programmation adéquate du circuit contrôleur. L'homme du métier ne rencontrera pas de difficulté particulière pour adapter le procédé selon la présente invention à ses propres besoins, notamment en ce qui concerne les valeurs fournies à titre d'exemple pour les fréquences et les grandeurs de correction.

## Revendications

1. Procédé de détection du début d'une plongée pour dispositif électronique portable (1) présentant au moins un premier mode de fonctionnement et un second mode de fonctionnement, dit mode plongée, et comportant notamment un capteur de pression (5) pour mesurer la valeur de la pression environnante (P) ainsi que des circuits électroniques (2) de traitement des résultats desdites mesures comprenant une base de temps (4) et au moins une zone mémoire (7, 8), **caractérisé en ce que** le procédé, mis en oeuvre dans ledit premier mode de fonctionnement, comporte les étapes consistant à :
a) mesurer une valeur de la pression environnante et la mémoriser en tant que pression de référence (Pref),
b) mesurer périodiquement la valeur de la pression environnante (P) à une première fréquence (f1),
c) calculer périodiquement la valeur de la variation de pression (dP) entre la pression environnante mesurée (P) et la pression de référence (Pref) à ladite première fréquence (f1) et, comparer ladite valeur de variation de la pression (dP) à une valeur prédéfinie, appelée seuil de déclenchement (S) et stockée dans ladite zone mémoire (7),
d) activer ledit mode plongée si ladite valeur de variation de pression (dP) est supérieure au dit seuil de déclenchement ou, dans le cas contraire, continuer à l'étape e),
e) comparer périodiquement, à une seconde fréquence (f2), la valeur absolue de ladite valeur de variation de la pression (dP) à une grandeur prédéfinie, stockée (c1) dans ladite zone mémoire (7), ou déterminée (dPm) sur la base de valeurs de pression mesurées, ladite grandeur étant inférieure au dit seuil de déclenchement (S),
f) effectuer une correction de la valeur de la pression de référence (Pref) si la valeur de variation de la pression (dP) est supérieure à ladite grandeur ou, dans le cas contraire, mémoriser la dernière valeur de pression mesurée (P) en tant que nouvelle valeur de la pression de référence (Pref), puis
g) reprendre à l'étape b).

2. Procédé de détection selon la revendication 1, **caractérisé en ce que** ladite seconde fréquence (f2) est inférieure ou égale à ladite première fréquence (f1), et **en ce qu'**il comprend en outre après l'étape d) et avant de continuer à l'étape e) les étapes consistant à :
d') déterminer périodiquement, à une troisième fréquence, le signe de ladite variation de la pression (dP), ladite troisième fréquence étant comprise entre lesdites première et seconde fréquences (f1, f2),
d") mémoriser la valeur de la dernière pression mesurée en tant que valeur de la pression de référence (Pref) puis reprendre à l'étape b) si ladite variation de pression (dP) est négative ou, dans le cas contraire, continuer à l'étape e).

3. Procédé de détection selon la revendication 1 ou 2 dans lequel, lorsque ladite grandeur est prédéfinie, celle-ci étant appelée premier facteur de correction (c1), ladite correction de l'étape f) consiste à additionner ledit premier facteur de correction (c1) à ladite valeur de la pression de référence mémorisée, le résultat de l'addition étant mémorisée en tant que nouvelle valeur de la pression de référence (Pref).

4. Procédé de détection selon la revendication 3, dans lequel, l'accomplissement des étapes e) à g) définissant un cycle, ledit premier facteur de correction (c1) est remplacé dans les étapes e) et f), dans le déroulement de un cycle sur n, par une grandeur prédéfinie supplémentaire, appelée second facteur de correction (c2) et dont la valeur est comprise entre celles dudit premier facteur de correction et dudit seuil de déclenchement, lorsqu'une correction a effectivement été apportée à la valeur de la pression de référence au cours des n-1 derniers cycles écoulés, n étant un nombre entier compris entre deux et dix.

5. Procédé de détection selon la revendication 1 ou 2 dans lequel, lorsque ladite grandeur est déterminée sur la base de valeurs de pression mesurées, l'étape e) comprend en outre une action de mise en mémoire de ladite valeur de la variation de pression (dP) à ladite seconde fréquence (f2), au moins les trois dernières valeurs de la variation de pression (dPi-2, dPi-1, dP) mémorisées étant utilisées pour calculer ladite grandeur, cette dernière correspondant au résultat du calcul de la moyenne de la variation de pression (dPm) sur lesdites au moins trois dernières valeurs, ladite correction de l'étape f) consistant à additionner ladite grandeur (dPm) à ladite valeur de la pression de référence mémorisée, le résultat de l'addition étant mémorisé en tant que nouvelle valeur de la pression de référence (Pref).

6. Procédé de détection selon la revendication 5, dans lequel ladite grandeur est calculée sur la base des quatre dernières valeurs de la variation de pression (dPi-3, dPi-2, dPi-1, dP) mémorisées.

7. Procédé de détection selon les revendications 2 et 5 ou 2 et 6 dans lequel, lorsque le signe de la dernière variation de pression (dP) calculée est négative dans l'étape d"), les valeurs de la variation de pression mémorisées (dPi-3, dPi-2, dPi-1, dP) sont toutes remplacées par zéro avant de reprendre à l'étape b).

8. Procédé de détection selon la revendication 1, dans lequel l'étape e) comprend en outre une action de mise en mémoire de ladite valeur de la variation de pression (dP) à ladite seconde fréquence (f2), au moins les trois dernières valeurs de la variation de pression (dPi-2, dPi-1, dP) mémorisées étant utilisées pour calculer ladite grandeur, cette dernière correspondant à la valeur absolue du résultat du calcul de la moyenne de la variation de pression (dPm) sur lesdites au moins trois dernières valeurs, ladite correction de l'étape f) consistant à additionner ladite valeur de la moyenne de la variation de pression (dPm) à ladite valeur de la pression de référence mémorisée, le résultat de l'addition étant mémorisé en tant que nouvelle valeur de la pression de référence (Pref).

9. Procédé de détection selon la revendication 2 ou 7, dans lequel les première et troisième fréquences sont égales.

10. Procédé de détection selon l'une quelconque des revendications précédentes, dans lequel ladite première fréquence (f1) présente une valeur comprise sensiblement entre 0,1 et 10 Hz.

11. Procédé de détection selon l'une quelconque des revendications précédentes, dans lequel ladite seconde fréquence (f2) présente une valeur comprise sensiblement entre 0,001 et 0,04 Hz.

12. Procédé de détection selon l'une quelconque des revendications précédentes, dans lequel la valeur dudit seuil de déclenchement correspond à une hauteur d'eau comprise sensiblement entre 0,2 et 1,5 mètres.

13. Procédé de détection selon l'une quelconque des revendications précédentes, comportant une étape supplémentaire mise en oeuvre à une quatrième fréquence et au cours de laquelle la valeur de la pression de référence (Pref) mémorisée est sauvegardée dans une zone mémoire supplémentaire pour être utilisée ultérieurement dans le mode plongée en tant que valeur de la pression réelle à la surface du plan d'eau dans lequel la plongée est effectuée.

14. Programme d'ordinateur installé dans un circuit contrôleur pour la mise en oeuvre du procédé selon l'une quelconque des revendications précédentes.

15. Circuit contrôleur pour dispositif électronique portable agencé pour la mise en oeuvre du procédé de détection selon l'une quelconque des revendications 1 à 13.

16. Dispositif électronique portable comprenant un circuit contrôleur selon la revendication 15.

## Claims

1. Method for detecting the start of a dive for a portable electronic device (1) having at least a first operating mode and a second operating mode, called the dive mode, and comprising in particular a pressure sensor (5) for measuring the value of the ambient pressure (P) and electronic circuits (2) for processing the results of said measurements comprising a time base (4) and at least one memory zone (7, 8), **characterised in that** the method, implemented in said first operating mode, comprises the steps of:
a) measuring an ambient pressure value and storing it as a reference value (Pref);
b) periodically measuring the value of the ambient pressure (P) at a first frequency (f1),
c) periodically calculating the value of the variation in pressure (dP) between the measured ambient pressure (P) and the reference pressure (Pref) at said first frequency (f1) and comparing said pressure variation value (dP) to a predefined value, called the trigger threshold (S) stored in said memory zone (7),
d) activating said dive mode if the pressure variation value (dP) is higher than said trigger threshold or, in the opposite case, continuing to step e),
e) periodically comparing, at a second frequency (f2), the absolute value of said pressure variation (dP) to a predefined quantity, stored (c1) in said memory zone (7), or determined (dPm) on the basis of measured pressure values, said quantity being less than said trigger threshold (S),
f) making a correction to the reference pressure value (Pref) if the absolute value of the pressure variation (dP) is higher than said quantity or, in the opposite case, storing the last measured pressure value (P) as the new reference pressure value (Pref), then
g) returning to step b).

2. Detection method according to claim 1, wherein said second frequency (f2) is lower than or equal to said first frequency (f1 and further including, after step d) and before going on to step e), the steps consisting in:
d') periodically determining, at a third frequency (f3), the sign of the pressure variation (dP), said third frequency (f3) being comprised between said first and second frequencies (f1, f2),
d") storing the value of the last measured pressure as the reference pressure value (Pref) then returning to step b) if said pressure variation (dP) is negative or, in the opposite case, continuing to step e).

3. Detection method according to claim 1 or 2, wherein, when said quantity is predefined, the latter being called the first correction factor (c1 said correction at step f) consists in adding said first correction factor (c1) to said stored reference pressure value, the result of the addition being stored as a new reference pressure value (Pref).

4. Detection method according to claim 3, wherein, completion of steps e) to g) defining a cycle, said first correction factor (c1) is replaced in steps e) and f), in one cycle in every n cycles, by an additional predefined quantity, called the second correction factor (c2) and the value of which is comprised between those of said first correction factor and said trigger threshold, when a correction has been made to the reference pressure value during the last n-1 cycles carried out, n being an integer number comprised between two and ten.

5. Detection method according to claim 1 or 2 wherein, when said quantity is defined on the basis of measured pressure values, step e) further includes an action of storing said pressure variation value (dP) at said second frequency (f2), at least the last three pressure variation values (dPi-2, dPi-1, dP) stored being used to calculate said quantity, this latter corresponding to the result of the calculation of the mean pressure variation (dPm) over said at least last three values, said correction at step f) consisting in adding said quantity (dPm) to said stored reference pressure value, the result of the addition being stored as a new reference pressure value (Pref).

6. Detection method according to claim 5, wherein said quantity is calculated on the basis of the last four pressure variation values (dPi-3, dPi-2, dPi-1, dP) stored.

7. Detection method according to claims 2 and 5 or 2 and 6, wherein, when the sign of the last calculated pressure variation (dP) is negative in step d"), the stored pressure variation values (dPi-3, dPi-2, dPi-1, dP) are all replaced by zero before returning to step b).

8. Detection method according to claim 1, wherein step e) further includes an action of storing said pressure variation value (dP) at said second frequency (f2), at least the last three pressure variation values (dPi-2, dPi-1, dP) stored being used to calculate said quantity, this latter corresponding to the absolute value of the result of the calculation of the mean pressure variation (dPm) of said at least last three values, said correction at step f) consisting in adding said mean pressure variation value (dPm) to said stored reference pressure value, the result of the addition being stored as a new reference pressure value (Pref).

9. Detection method according to claim 2 or 7, wherein the first and third frequencies are equal.

10. Detection method according to any of the preceding claims, wherein said first frequency (f1) has a value substantially comprised between 0.1 and 10 Hz.

11. Detection method according to any of the preceding claims, wherein said second frequency (f2) has a value substantially comprised between 0.001 and 0.04 Hz.

12. Detection method according to any of the preceding claims, wherein the value of said trigger threshold corresponds to a height of water substantially comprised between 0.2 and 1.5 meters.

13. Detection method according to any of the preceding claims, comprising an additional step implemented at a fourth frequency and during which the stored reference pressure value (Pref) is saved in an additional memory zone to be subsequently used in the dive mode as the real pressure value at the surface of the body of water in which the dive is made.

14. Computer programme installed in a controller circuit for implementing the method according to any of the preceding claims.

15. Controller circuit for a portable electronic device arranged for implementing the detection method according to any of claims 1 to 13.

16. Portable electronic device including a controller circuit according to claim 15.

## Patentansprüche

1. Verfahren zum Erfassen des Beginns eines Tauchgangs für tragbare elektronische Einrichtungen (1), umfassend zumindest einen ersten Betriebsmodus und einen zweiten Betriebsmodus, den sogenannten Tauchmodus, und enthaltend insbesondere einen Drucksensor (5) zum Messen des Umgebungsdruckwerts (P) sowie elektronische Schaltkreise (2) zum Verarbeiten der Messergebnisse, die eine Zeitbasis (4) und zumindest einen Speicherbereich (7, 8) enthalten, **dadurch gekennzeichnet, dass** das Verfahren unter Anwendung des ersten Betriebsmodus die folgenden Schritte umfasst:
a) Messen eines Umgebungsdruckwertes und Abspeichern desselben als Referenzdruck (Pref),
b) periodisches Messen des Umgebungsdruckwertes (P) mit einer ersten Frequenz (f1),
c) periodisches Berechnen des Wertes der Druckänderung (dP) zwischen dem gemessenen Umgebungsdruck (P) und dem Referenzdruck (Pref) mit der ersten Frequenz (f1) und Vergleichen des Druckänderungswertes (dP) mit einem vorbestimmten Wert, der Auslöseschwellwert (S) genannt wird und in dem Speicherbereich (7) abgelegt ist,
d) Aktivieren des Tauchmodus, wenn der Druckänderungswert (dP) höher als der Auslöseschwellwert ist bzw. im gegenteiligen Fall Fortfahren mit Schritt e),
e) periodisches Vergleichen des Absolutwertes des Druckänderungswertes (dP) mit einer vorbestimmten Größe mit einer zweiten Frequenz (f2), welche Größe (c1) in dem Speicherbereich (7) abgelegt ist bzw. (dPm) auf Basis von Messdruckwerten ermittelt wird, wobei die Größe unter dem Auslöseschwellwert (S) liegt,
f) Durchführen einer Korrektur des Referenzdruckwertes (Pref), wenn der Druckänderungswert (dP) höher als die genannte Größe ist bzw. im gegenteiligen Fall Abspeichern des zuletzt gemessenen Druckwertes (P) als neuen Referenzdruckwertes (Pref), dann
g) Fortfahren mit Schritt b).

2. Erfassungsverfahren nach Anspruch 1, **dadurch gekennzeichnet, dass** die zweite Frequenz (F2) niedriger oder gleich der ersten Frequenz (f1) ist und dass es ferner nach dem Schritt d) und vor dem Fortfahren mit Schritt e) die folgenden Schritte umfasst:
d') periodisches Ermitteln des Vorzeichens der Druckänderung (dP) mit einer dritten Frequenz, wobei die dritte Frequenz zwischen der ersten und der zweiten Frequenz (f1, f2) liegt,
d") Abspeichern des zuletzt gemessenen Druckwertes als Referenzdruckwert (Pref), dann Fortfahren mit Schritt b), wenn die Druckänderung (dP) negativ ist bzw. im gegenteiligen Fall Fortfahren mit Schritt e).

3. Erfassungsverfahren nach Anspruch 1 oder 2, wobei dann, wenn die Größe, erster Korrekturfaktor (c1) genannt, vorbestimmt ist, die Korrektur bei Schritt f) darin besteht, den ersten Korrekturfaktor (c1) zum abgespeicherten Referenzdruckwert hinzuzuaddieren, wobei das Ergebnis der Addition als neuer Referenzdruckwert (Pref) abgespeichert wird.

4. Erfassungsverfahren nach Anspruch 3, wobei bei Ausführung der Schritte e) bis g), die einen Zyklus definieren, der erste Korrekturfaktor (c1) in den Schritten e) und f) beim Ablaufen eines von n Zyklen mit einer vorbestimmten Zusatzgröße, zweiter Korrekturfaktor (c2) genannt, ersetzt wird, deren Wert zwischen dem ersten Korrekturfaktor und dem Auslöseschwellwert liegt, wenn beim Referenzdruckwert im Laufe der letzten n-1 abgelaufenen Zyklen tatsächlich eine Korrektur erfolgt ist, wobei n eine ganze Zahl zwischen zwei und zehn ist.

5. Erfassungsverfahren nach Anspruch 1 oder 2, bei dem dann, wenn die Größe auf Basis von Druckmesswerten ermittelt wird, der Schritt e) ferner ein Einspeichern des Druckänderungswertes (dP) mit der zweiten Frequenz (f2) umfasst, wobei zumindest die drei zuletzt abgespeicherten Druckänderungswerte (dPi-2, dPi-1, dP) dazu verwendet werden, die Größe zu berechnen, wobei letztere dem Ergebnis der Berechnung des Durchschnitts der Druckänderung (dPm) über die zumindest drei letzten Werte entspricht, wobei die Korrektur von Schritt f) darin besteht, die Größe (dPm) zum abgespeicherten Referenzdruckwert hinzuzuaddieren, wobei das Ergebnis der Addition als neuer Referenzdruckwert (Pref) abgespeichert wird.

6. Erfassungsverfahren nach Anspruch 5, wobei die Größe auf Basis der vier zuletzt abgespeicherten Druckänderungswerte (dPi-3, dPi-2, dPi-1, dP) berechnet wird.

7. Erfassungsverfahren nach den Ansprüchen 2 und 5 oder 2 und 6, wobei dann, wenn das Vorzeichen der zuletzt berechneten Druckänderung (dP) bei Schritt d") negativ ist, die abgespeicherten Druckänderungswerte (dPi-3, dPi-2, dPi-1, dP) alle durch Null ersetzt werden, bevor mit Schritt b) fortgefahren wird.

8. Erfassungsverfahren nach Anspruch 1, wobei der Schritt e) ferner ein Einspeichern des Druckänderungswertes (dP) mit der zweiten Frequenz (f2) umfasst, wobei zumindest die drei zuletzt abgespeicherten Druckänderungswerte (dPi-2, dPi-1, dP) dazu verwendet werden, die genannte Größe zu berechnen, wobei letztere dem Absolutwert vom Ergebnis der Berechnung des Durchschnitts der Druckänderung (dPm) über die zumindest letzten drei Werte entspricht, wobei die Korrektur von Schritt f) darin besteht, den Druckänderungsdurchschnittswert (dPm) zum abgespeicherten Referenzdruckwert hinzuzuaddieren, wobei das Ergebnis der Addition als neuer Referenzdruckwert (Pref) abgespeichert wird.

9. Erfassungsverfahren nach Anspruch 2 oder 7, wobei die erste und die dritte Frequenz gleich sind.

10. Erfassungsverfahren nach irgendeinem der vorangehenden Ansprüche, wobei die erste Frequenz (f1) einen Wert aufweist, der im wesentlichen zwischen 0,1 und 10 Hz liegt.

11. Erfassungsverfahren nach irgendeinem der vorangehenden Ansprüche, wobei die zweite Frequenz (f2) einen Wert aufweist, der im wesentlichen zwischen 0,001 und 0,04 Hz liegt.

12. Erfassungsverfahren nach irgendeinem der vorangehenden Ansprüche, wobei der Auslöseschwellwert einer Wassertiefe entspricht, die im wesentlichen zwischen 0,2 und 1,5 m liegt.

13. Erfassungsverfahren nach irgendeinem der vorangehenden Ansprüche, umfassend einen Zusatzschritt, der mit einer vierten Frequenz ausgeführt wird und im Laufe dessen der abgespeicherte Referenzdruckwert in einem Zusatzspeicherbereich abgelegt wird, um später bei dem Tauchmodus als Ist-Druckwert an der Oberfläche des Gewässers verwendet zu werden, in dem der Tauchgang erfolgt.

14. Computerprogramm, das in einem Controller zum Durchführen des Verfahrens nach irgendeinem der vorangehenden Ansprüche installiert ist.

15. Controller für tragbare elektronische Einrichtungen, vorgesehen zum Durchführen des Erfassungsverfahrens nach irgendeinem der Ansprüche 1 bis 13.

16. Tragbare elektronische Einrichtung mit einem Controller nach Anspruch 15.
